# EUROPEAN PATENT APPLICATION

(11) **EP 1 164 554 A2**
(43) Date of publication of application: **19.12.2001**
(21) Application number: 01304031.6
(22) Date of filing: 02.05.2001
(51) Int. Cl.: G07F 19/00, G06F 17/60

(54) **System and method for converting check-based bill payments to electronic form**

(30) Priority: 25.05.2000 US 578543
(71) Applicant: Payment Engineering LLC, Chicago, Illinois 60657 (US)
(72) Inventor: Watson, Craig, Chicago, Illinois 60657 (US)
(74) Representative: Charig, Raymond Julian

(57) **Abstract**

The present invention is a system and method for converting purchaser check-based bill payments with which the majority of consumers are most comfortable, into a stream of payments with efficiency equal to online presentment and payment methods. A paper-based consolidated billing and payment form is created by an issuing financial institution or exchange by way of direct billet downloads, and the form is transmitted to the purchaser. The consolidated billing/payment form contains essential billing data for recurrent purchaser expenditures, is bar coded or otherwise electronically identified, and is filled out by purchasers by confirming or modifying payment amounts, timing, and source of funds directly on the paper form. Space is provided for additional entries, and a variety of supplemental financial data forms may be generated. The consolidated billing and payment form is then returned to the issuing financial institution or payment exchange for image processing and payment execution, converting payments into electronic form, and enabling the elimination of paper checks for purchaser bill payments.

## Description

### FIELD OF THE INVENTION

The present invention relates to a system and method of converting check-based payments to electronic and consolidated form.

### BACKGROUND TO THE INVENTION

Despite the inherent efficiency of online bill payment, paper checks remain the dominant form of payment for recurrent purchaser expenditures. Large-scale adoption of online electronic payment requires that a host of barriers be overcome: for example, a threshold number of billers needs to be accessible online and the ubiquity of traditional paper checks favors traditional banking.

What is needed is a means of allowing purchasers (households and small businesses) to continue to use paper-based means of recurrent payment with which they are most comfortable, while nevertheless enabling financial institutions and billers to secure the efficiencies of electronic payments. The system should also enable and accelerate eventual transition to full electronic payments, for example, online over the Internet.

### SUMMARY OF THE INVENTION

A system in accordance with the principles of the present invention provides for the electronic processing of purchasers (such as households and small businesses) payments, without requiring technology or electronics at the point of use. A system in accordance with the principles of the present invention addresses the unmet need for a payment approach that blends check-like familiarity with electronic efficiency. A system in accordance with the principles of the present invention encourages organization and consolidation of recurrent bills and payments, and accelerates the transition to online bill payment.

While purchasers more comfortable with checks continue to make payments using a paper-based system, a system in accordance with the principles of the present invention provides most of the efficiencies of electronic payment. A system in accordance with the principles of the present invention specifically overcomes the inefficiencies of paper checks, by replacing them with a single consolidated billing and payment form sent to one place for electronic payment of a plurality of billers.

In particular, in a given payment cycle in a system in accordance with the principles of the present invention:
(a) Financial institutions (such as banks), a payment exchange, or similar entity generates a bar-coded (or radio frequency chip-enabled or character recognition-enabled) Consolidated Billing/Payment Form (CBPF) and mails the Consolidated Billing/Payment Form (CBPF) to the purchaser. In accordance with the principles of the present invention, the Consolidated Billing/Payment Form (CBPF) contains essential billing information for accounts included in the underlying billing data. The same data may also be posted to an Internet-accessible website for reference by the customer if desired. In addition to payment due information, space and options are provided to return payment instructions to the issuing bank or exchange.
(b) Purchasers (such as households and businesses) fill out the Consolidated Billing/Payment Form (CBPF), confirm or modify the amount, timing, and sources of payment for each billed item, and return the form to the issuing financial institutions or payment exchange for execution of these instructions. In accordance with the principles of the present invention, such instructions may be spot or standing instructions, may access multiple accounts or credit sources for payment, and may modify timing and amount, all by noting the indicated options on the form.
(c) Financial institutions or the payment exchange receive the form, store an image of the form, electronically process the payment instructions, and update the file for the next payment cycle.

The inventive process realizes many of the same benefits provided by online electronic forms of bill payment. All of the parties - billers, financial institutions, and purchasers -- benefit:
Benefits to Billers:
Billers have the opportunity to enroll their purchasers (households and business customers) in the service on an immediate trial basis, without waiting for delayed and speculative adoption of online electronic payment;
Billers save money and resources formerly used to generate and issue paper bills to be mailed to their constituent purchasers (households or businesses);
Billers may issue thick or thin format (complete or abbreviated) bills to their accounts, and these may be included in a single mailing of the form, or with the customer's financial institution account statement, or separately;
Billers need not lose their connection to the end user of their services, since their bills are still being issued and delivered to the purchasers (households and businesses) served.
Billers reduce their expense for billing and collection activities now conducted by issuing financial institutions or exchanges.

### Benefits to Financial institutions:

Financial institutions, in providing a paper-based service for sophisticated bill payment, get first access to converting the vast majority of purchasers not yet banking online;

Financial institutions, by providing a user-friendly service leveraging the existing banking relationship, have prime position in securing customer business when the transition to online banking does take place.

Financial institutions may utilize the data already in their check processing systems to create a consolidated billing form for their customers, thus foregoing the need to await voluntary registration by the purchaser;

Financial institutions, insofar as they begin by using information already in their internal systems, need not violate privacy considerations of purchasers;

Financial institutions assume a central role in the bill payment process of their non-Internet customers, providing a value-added service, and leveraging in the most useful way the data accumulated in their check processing operations;

Financial institutions, in eliminating check processing for payments made by participants in the service, dramatically reduce their operating costs and immediately improve the profitability of each customer account;

Financial institutions provide a cost-reducing billing and collection service to billers, creating new sources of fee-income potential;

Financial institutions, in handling the bill payment requirements of their customers, enjoy privileged access to customer information unavailable to third-party web or non-web parties;

Benefits to purchasers:
Purchasers benefit from the automatic assembly and organization of their billing and payment materials, reducing the time and pressure inherent in getting bills paid;
Purchasers benefit from having all billing information in one place, with all the information needed for decision-making already provided;
Purchasers may choose alternate sources of payment for each of the bills included in the consolidated billing/payment form, including deposit accounts and credit sources.
Purchasers may choose the form of bill (thick or thin format) to be received, and may receive mixed forms in the same package;
Purchasers may choose the frequency (weekly, bi-weekly, monthly, quarterly, or annually) of payments, and have these instructions entered and acted upon by the financial institution.
Purchasers have the flexibility of entering as payment the amount due (default condition), or a different amount, payable by the due date or a different date to be specified (in the following time period, allowing time for the mail).
Purchasers, in using the service, have a vehicle for helping them increase their comfort level and familiarity with eventual use of online banking, thus accelerating conversion to the Internet.

### DRAWINGS OF THE PREFERRED EMBODIMENT

Figure 1 is a schematic representation of a conventional bill payment, an online electronic bill payment and a hybrid electronic bill payment accordance with the principles of the present invention.

Figure 2 is a representative illustration of a Consolidated Billing/Payment Form in accordance with the principles of the present invention.

Figure 3 shows an example of supplemental information that may be provided in the Consolidated Billing/Payment Form of figure 2.

Figure 4 is a flow diagram of a process for converting manual payments to electronic form utilizing the Consolidated Billing/Payment Form of figure 2 in accordance with the principles of the present invention.

Figure 5 is a diagram of the billing cycles and their respective payment windows for four bills, each with a different issue date, in accordance with the principles of the present invention.

Figure 6 is a diagram of the billing cycles and their respective payment windows for four bills, as set forth in figure 5, with the additional payment windows provided by issuing a second Consolidated Billing/Payment Form during a given payment month, in accordance with the principles of the present invention.

Figure 7 is a block diagram of a system in accordance with the principles of the present invention designed to produce consolidated billing/payment forms from available financial institution data on account holders' check payments.

Figure 8 is a block diagram of a system in accordance with the principles of the present invention designed to process consolidated billing/payment forms.

### DESCRIPTION OF THE PREFERRED EMBODIMENT

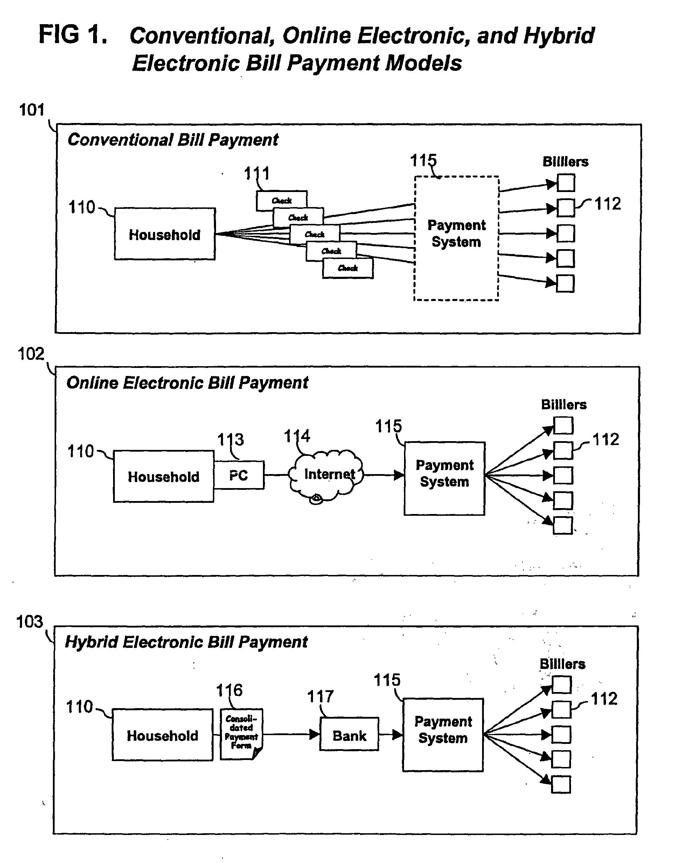

Referring first to figure 1, three alternative forms of bill payment are seen. In conventional bill payment 101 the purchaser 110 issues individual checks 111 to each of a plurality of billers 112. These payments are processed through the financial institution payment portion 115.

In online bill presentment and payment 102, purchasers 110 (such as households and businesses) use an electronic device (a personal computer, telephone, web-enabled television, hand-held device or other technology) to view bills and to send instructions electronically (including over the Internet 114) to a payment portion 115.

In a hybrid electronic bill payment system 103 in accordance with the principles of the present invention, purchasers 110 receive and pay their bills using the Consolidated Billing/Payment Form 116. The form 116 is filled out and sent to a processing financial institution (such as a bank) or exchange which houses the technology required to efficiently process the form and issue the indicated payments electronically through the payment portion 115 to billers 112.

The hybrid electronic bill payment system 103 enables the rapid enrollment of a multitude of purchasers in an electronic payment medium without requiring technology at the purchaser point of use. The technology required to convert manual or paper-based payments to electronic form is proximate to the payment system itself, rather than at the purchaser.

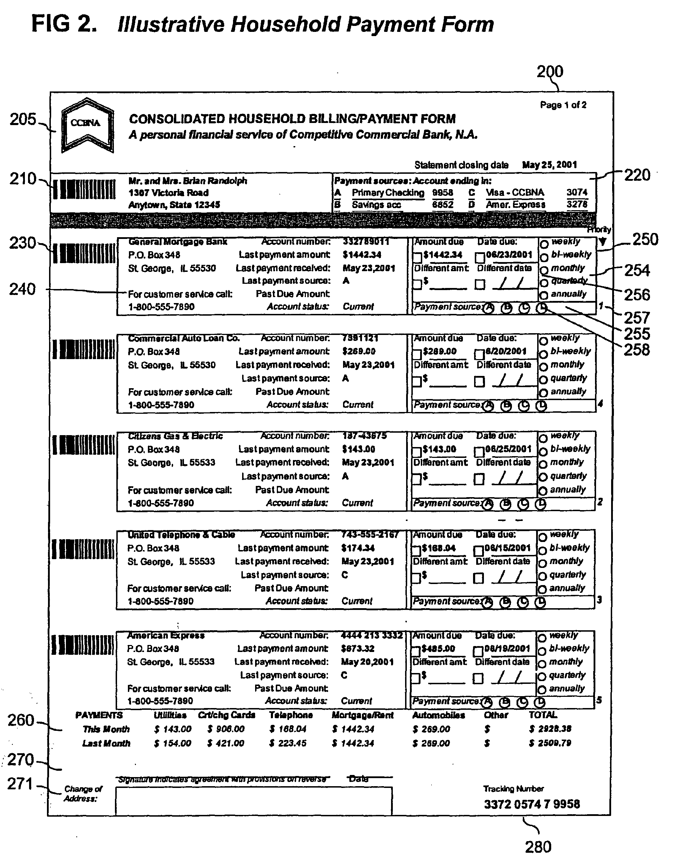

Referring now to figure 2, an illustrative example of a consolidated billing/payment form 200 is seen for use in a hybrid electronic bill payment system in accordance with the principles of the present invention. The header section 205 of the form indicates the issuing financial institution or exchange and may contain the logo, identification, and other promotional material. An electronic identifier such as a bar code 210 is provided that identifies the form and specifically matches the form to the purchaser.

A tracking number 280 at the bottom of the form conforms to bar code 210. When read by a barcode reader in the hybrid electronic bill payment system 103, the barcode 210 notifies the payment portion 115 that the specific form is in process. The hybrid electronic bill payment system 103 then links the data on the physical form to the transaction processing data and fund sources needed to convert the instructions into actual payments. In an alternative configuration of the present invention, a radio frequency chip, or an optical or magnetic character recognition, or another form of identifying technology may replace the barcode.

Identifying information 220 about the accounts from which payment may be made as designated by the user is provided below the header section 205. These payment alternatives include forms of checking, savings and credit sources, deposit accounts, credit or charge card accounts or investment fund sources, etc., each identified by name, and/or full or partial account number.

An electronic identifier such as barcode 230 is provided as a specific identifier for each billing item, and is present for each billing entry on the form. An associated biller and payment box 240 is provided. The associated biller and payment box 240 includes name, address, customer service number, account number, last payment amount, last payment received date, since last payment, past due amount if any, and account status (current, late, etc.).

On the right side of the associated biller and payment box 240, a current payment information window 250 is provided. The current payment information window 250 shows the amount currently due, the due date, and provides space for entry of a different amount, and different date. On the right side of current payment information window 250, a recurrent timing options 254 is provided. The recurrent timing options 254 may be made by for example filling in a computer readable grid 256 for instructions for recurrent payment timing (weekly, monthly, quarterly, annually, etc). Finally, also on the right side of the associated biller and payment box 240, a selection of alternative payment sources 255 corresponding to sources 220 is provided. The subject payment may be made by for example filling in a computer readable grid 258 from the selection of alternative payment sources 255. Selecting one of the choices from the computer readable grid 258 instructs the payment portion 115 to deduct the payment amount from the selected account. Any single selection may be made for any item on the form, and a combination of sources might be chosen.

In a preferred embodiment of the present invention, the hybrid electronic bill payment system 103 may determine, from standing or default instructions, the share of payment to be borne by each account. For example, three sources might be equally divided into thirds, or one account might be debited for the maximum available funds, with the balance rolling over into the next payment source. Also indicated on the payment form is a priority notation 257, designating the priority in which billing items will be paid in the event of any number of potential contingencies, including shortage of funds in any one of the payment accounts.

A summary detail 260 shows the current and prior month information by subset of billing types (e.g., credit cards, utilities, or any other segmentation). Relevant totals are also shown, including the current period total billing amount. A signature line 270 and a change of address block 271 are also provided. Any number of other types of billing and payment information might be configured and supplied on the form, simply by providing the payment boxes with blank information spaces.

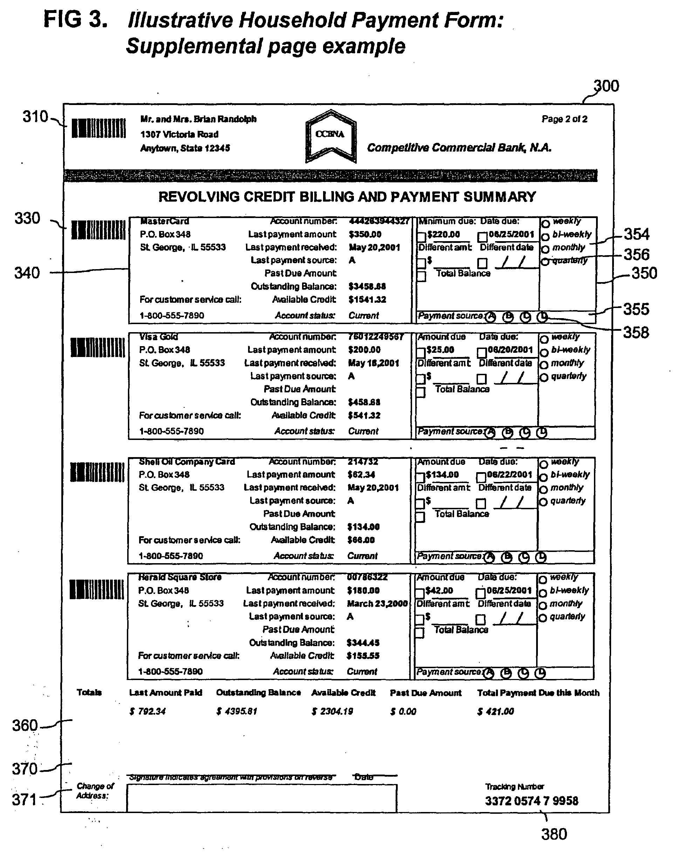

Referring now to figure 3, a consolidated billing/payment form 300 represents a specialized sheet with supplemental information that might serve special needs of a given purchaser. In the present example, all credit and charge card information has been assembled in one place. An electronic identifier such as barcode 310 is the identifier for the purchaser, while an electronic identifier such as barcode 330 is the identifier for a specific element of credit card information. Each special entry has its unique electronic identifier.

A specific credit information box 340 is provided. The specific credit information box 340 shows the specific credit information, including account name, address, customer service phone number, account number, last payment amount, last payment received date and amount, last payment source account, past due amount if any. In addition, the specific credit information box 340 contains specific credit-related information such as outstanding balance and available credit.

On the right side of the specific credit information box 340, a current payment information window 350 is provided. The current payment information window 350 shows the minimum payment due information, due date information, and space for revising the payment amount or timing, as well as an instruction to pay the total outstanding balance. On the right side of current payment information window 350, a recurrent timing options 354 is provided. The recurrent timing options may be made by for example filling in a computer readable grid 356 for instructions for recurrent payment timing (weekly, monthly, quarterly, annually, etc). Finally, also on the right side of the specific credit information box 340, a selection of alternative payment sources 355 corresponding to sources 220 is provided. The subject payment may be made by for example filling in a computer readable grid 358 from the selection of alternative payment sources 355. Selecting one of the choices from the computer readable grid 356 instructs the payment portion 115 to deduct the payment amount from the selected account. Any single selection may be made for any item on the form, and a combination of sources might be chosen.

A summary detail 360 shows the totals, last amount paid, outstanding balance, available credit, past due amount, and total payment due this month. A signature line 370 and a change of address block 271 are also provided. Any number of other types of billing and payment information might be configured and supplied on the form, simply by providing the payment boxes with blank information spaces.

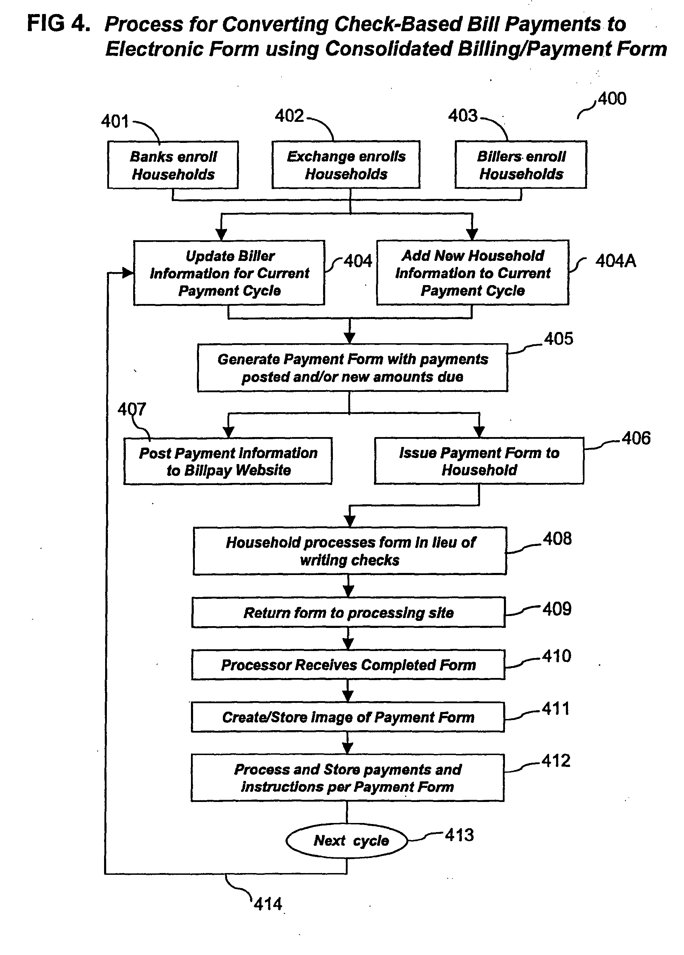

Figure 4 shows the overall process 400 for converting paper-based payments into electronic form in accordance with the principles of the present invention. Enrollment of purchasers in the process may be either by financial institutions 401, an exchange 402 or billers 403, as well as by purchasers themselves operating through any of these agencies. In the case of financial institutions 401, the preferred approach is to extract checking account data and compile a list of recurrent purchaser payments. Based on this information, a set of application connectors can be configured to electronically connect to the billers represented. By contrast, an exchange 402 may enroll purchasers on behalf of participating financial institutions, billers, or both.

Information for existing or previously enrolled purchasers is added or updated for the current payment cycle 404. This may include the addition of new billers, updated information on existing biller items, or other new information, such as changes to payment due dates or amounts previously submitted. If the account is new, then new information 404 is added from the source 401, 402, or 403. The information is then used to generate a current version of payment form 405. The form is then issued to the purchaser for its information, confirming prior payments and capturing payment instructions for the next period 406. At the same time, the payment and billing information is also entered into any website or websites the financial institution, biller, or exchange may wish to update online with the same information used to generate the payment form 407. The purchaser thus has the option of referring to this information online or in paper form at any time.

The purchaser receives the payment form and processes it in lieu of writing checks to individual payees 408. The form is returned 409 to the issuing exchange or financial institution for execution of the instructions. The payment processing site then receives the completed form 410, creates a stored image of the form 411, processes and records the executed instructions 412, and indexes the hybrid electronic bill payment system for the next cycle 413, returning 414 to update point 404 which captures amount and date paid information by account.

Any payment method that seeks to replace a plurality of independent bills with one consolidated billing will encounter the challenge of truncating the available payment period for one or more of the bills. The unique issue date of the consolidated billing form may prove to be early, late, or timely relative to the due date of any particular bill. This is a significant issue, because the purchaser desires to rely upon receipt of the consolidated bill to manage its spending, while not exposing itself to risk of late payment and associated credit implications. Further, it is known that purchasers pay bills in different ways, including waiting to pay at one point during the month; paying multiple times on receipt of individual bills; or waiting until a critical mass of bills has been accumulated. A consolidated billing and payment system in accordance with the principles of the present invention should be responsive to the issues created by the potential for timing truncation, and sufficiently flexible to accommodate alternative bill-payment behavior patterns.

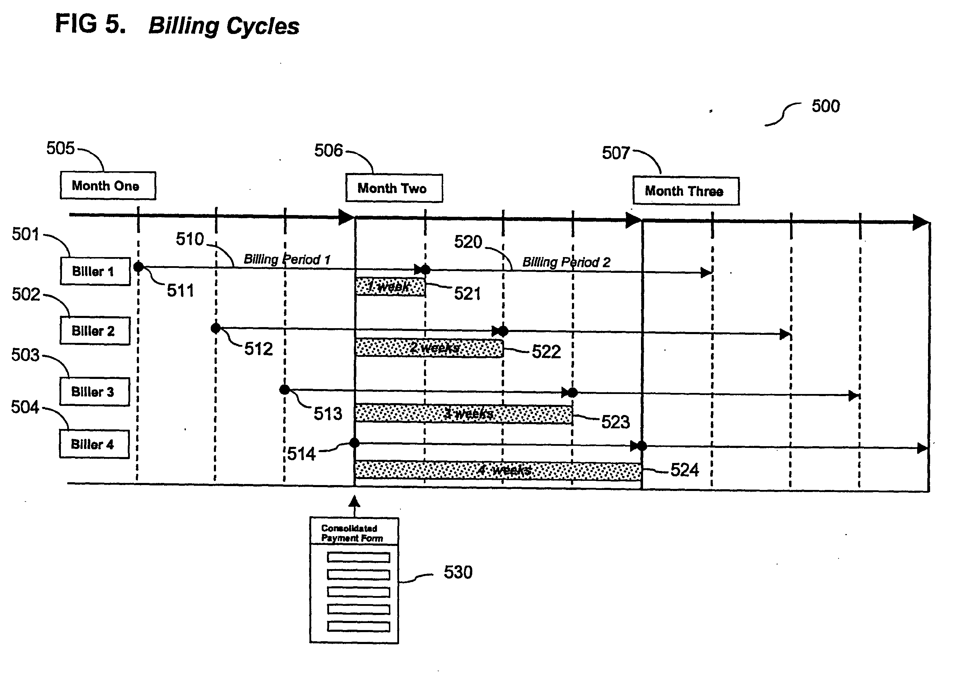

Figure 5 is a diagram of the billing cycles and their respective payment windows 500, each with a different issue date. The billing cycles and their respective payment windows 500 illustrate the technical source of the payment truncation challenge. The diagram of the billing cycles and their respective payment windows 500 shows the monthly issuance of four different bills 501, 502, 503, 504, each issued during one of the four weeks 511, 512, 513, 514 of a four-week billing cycle during month one 505 of a three-month cycle illustrated, including months 506 and 507. When the consolidated billing/payment form 530 is issued once during the payment period 510, it exposes one or more bills to a particularly short payment opportunity window before the bill comes due four weeks from its date of issuance in this example. The shaded bars 521, 522, 523, 524 illustrate the time remaining after issuance of the consolidated billing/payment form, with respect to four bills 501,502, 503 and 504.

As is seen from the billing cycles and their respective payment windows 500, a minimum of one week to a maximum of four weeks is the resulting payment window from the date of issuance of the consolidated billing/payment form. In addition to resulting in a truncated payment window for three of the four given bills, the range of preferred payment behaviors will aggravate this result, exposing a potentially large number of bills to being paid late. The phenomenon of truncated payment windows exists irrespective of the point of issuance of the consolidated billing/payment form; the only difference is the specific bill or bills for which the payment period is truncated.

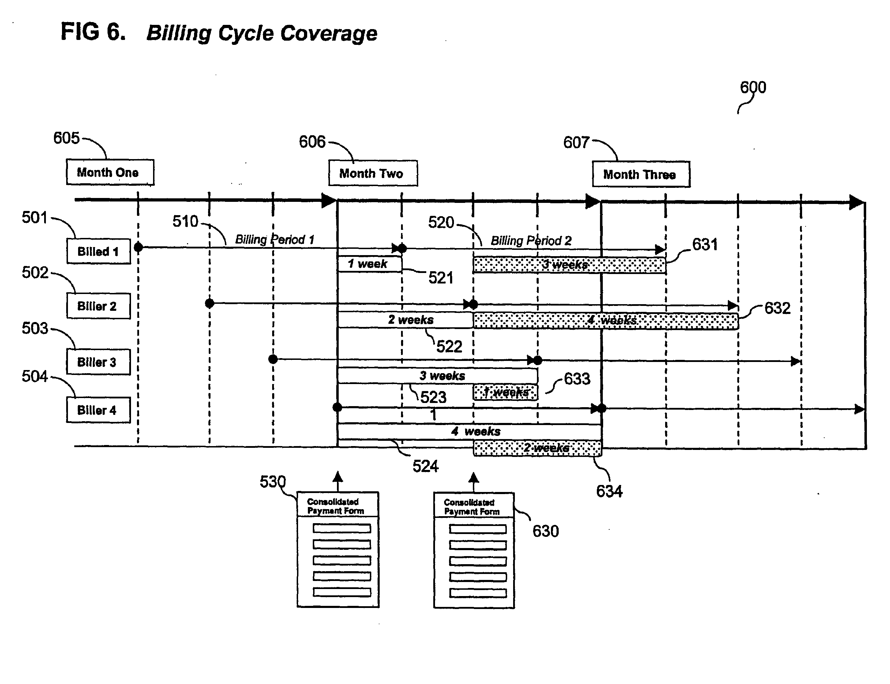

There are several approaches to addressing the truncated payment-period issue in accordance with the principles of the present invention:
(a) Multiple form billing. One solution to the truncation problem in accordance with the principles of the present invention is to issue the consolidated billing/payment form more than once during the payment period, thus allowing time for the purchaser to plan for the payments at risk. Multiple form issuance may continue indefinitely or exist for only some initial months. Figure 6 illustrates the additional coverage provided by the issuance of a second consolidated billing/payment form. The shaded bars 631, 632, 633, 634 show the duplicate or additional time provided by issuance of a second form 630. However, bill 501 continues to have a truncated payment window 521 during billing period one 510, even though the second payment form yields a three-week window during billing period 2, 520.
(b) Level payment billing. A second resolution to the truncation problem in accordance with the principles of the present invention is to immediately institute level payments for all bills capable of being put on an average payments basis. Under this solution, once a biller offers or consents to having its bills consolidated under the present inventive system, the bills it submits to the consolidation program are submitted on a straight-line or equal monthly payment basis. This approach ensures the purchaser is always aware of the payment amount and date, even absent timely receipt of a current bill.
(c) Modified due-date billing. Yet a third solution to the truncation problem in accordance with the principles of the present invention is to modify the due dates of bills under consolidation to eliminate the truncation problem at source. Pursuant to this solution, all billers serving a given purchaser, or only those billers with truncated payment periods, voluntarily modify their due dates to provide an adequate payment window relative to the issue date of the consolidated billing/payment form.
(d) Dynamic billing. In a fourth solution to the payment period truncation problem in accordance with the principles of the present invention, the consolidated billing/payment form is issued at systematically different times during the month to enable different bills to experience the maximum payment windows over the course of a period of months. The issue date of the consolidated billing/payment form is, in effect, rotated across various biller due dates, transferring the truncation issue to different bills each period.
(e) Optimized billing. An alternate form of the dynamic billing approach offers yet a fifth solution alternative in accordance with the principles of the present invention. The consolidated billing/payment form is issued at the one point during the month when the payment period is maximized for all bills, subject to their actual due dates. The solution is based on employing an algorithm for solving a time period maximization function subject to all actual due dates, and taking as variable the issue date of the consolidated billing/payment form.
(f) Delayed-issue billing. Yet a sixth solution to the truncation challenge in accordance with the principles of the present invention is to delay the start of billing under consolidation. This has the same effect as changing the due date in that it provides more time to make payments, but the specific intent is to get into the billing window by adjusting the issuance date, rather than by changing the due date.
(g) Compensated billing. In a seventh solution to the truncated payment period issue in accordance with the principles of the present invention, the financial institution or exchange issuing the consolidated billing/payment form could also compensate billers for their foregone cost of funds arising from late payments imposed by use of the consolidated billing/payment form system. Compensation would be based on actual or assumed payment experience.
(h) Optimized compensated billing. An eighth solution to the truncated payment period issue in accordance with the principles of the present invention, is a corollary to compensating billers for their foregone cost. When compensation is being offered to billers to offset the lost time value of money incurred in participating in the hybrid electronic bill payment system, there is an additional need to minimize the amount paid out in compensation. This variant of compensated billing sets the issue date of the consolidated billing/payment form to the date that minimizes the amount likely to be paid out in compensation. This date may not be unique, and may or may not coincide with a date that also maximizes the payment window.
(i) Date-aligned billing. Yet a ninth solution to the truncation problem in accordance with the principles of the present invention, all billers to a given purchaser are required to set their due dates to the same day, week or narrow timing period so a single consolidated billing/payment form will provide an adequate payment window for all billers.
(j) Purchaser-aligned billing. A tenth solution to the truncated payment period issue in accordance with the principles of the present invention, is a corollary to date-aligned billing. In combination with date-aligned billing, purchaser aligned billing provides an additional solution to the truncation problem in accordance with the principles of the present invention. If all bills share a common due date, the potential load on the hybrid electronic bill payment system may exceed the processing capacity of the system. In order to avoid such potential overload, billing dates should also be aligned so that a subset of all billed purchasers is actually being processed on a given day of the month. Once implemented, the hybrid electronic bill payment system would load each day with a capped maximum number of purchasers with payments due that day. Correspondingly, the distribution of payment dates across the days of the month helps protect against system overloads. Further, as each new purchaser joins the hybrid electronic bill payment system, a specific date may be allocated as the next available billing date, with further additional purchasers added to different dates to further distribute the processing load.
(k) Combination billing. A further solution to truncation in keeping with the principles of the present invention may be provided by a combination of one or more of the above approaches.

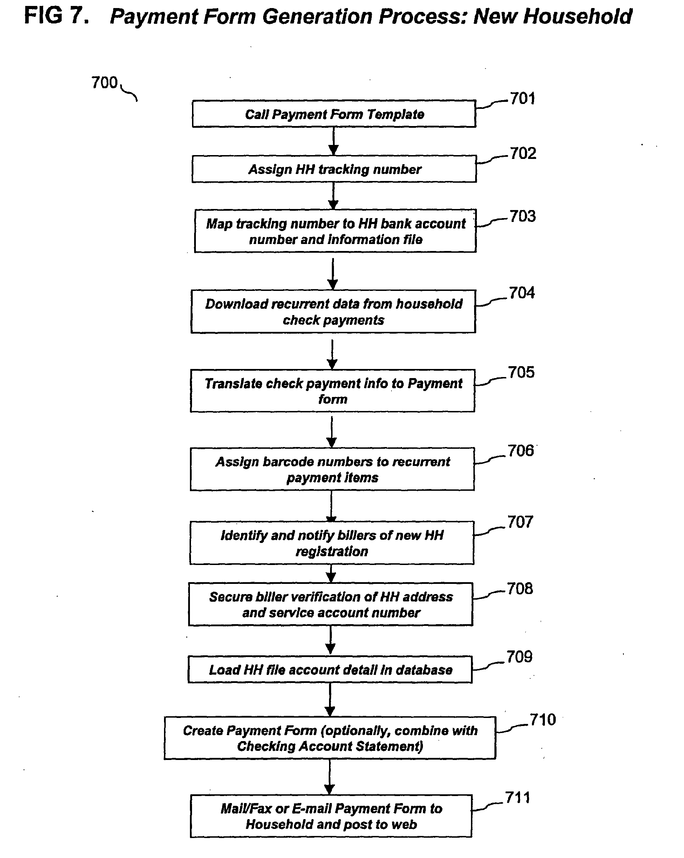

The present invention will be useful to financial institutions wishing to accelerate migration of their current check-paying customers to online bill payment. Accordingly, figure 7 identifies a process by which financial institutions might enroll their customers in the consolidated billing/payment form system. The initial form is developed from the database of checks currently being processed through the financial institution's payment system.

Referring to figure 7, an initial template of the consolidated billing/payment form is called from storage 701. A tracking number is assigned to the new file 702. The tracking number is mapped to an existing checking account number and any other customer information file data 703. The financial institution then downloads recurrent payment information from checking account data 704. The recurrent payment information is translated into consolidated payment billing/form format 705, based on the template of the consolidated billing/payment form.

Electronic identifiers such as barcodes are assigned to both the overall tracking number as well as each individual payment item 706. Billers identified in the recurrent payment data search are contacted to verify purchaser biller account details 708. A privacy release or other safeguard may be needed at this point, depending on the privacy policies and laws in effect. At a minimum, the payee list and checking account number may be collected, since this activity does not represent any sharing of information outside the financial institution itself. The verified purchaser account files are loaded into the payment form 709, and the consolidated billing/payment form is created 710, and subsequently issued 711 to the purchaser by mail, fax, or e-mail.

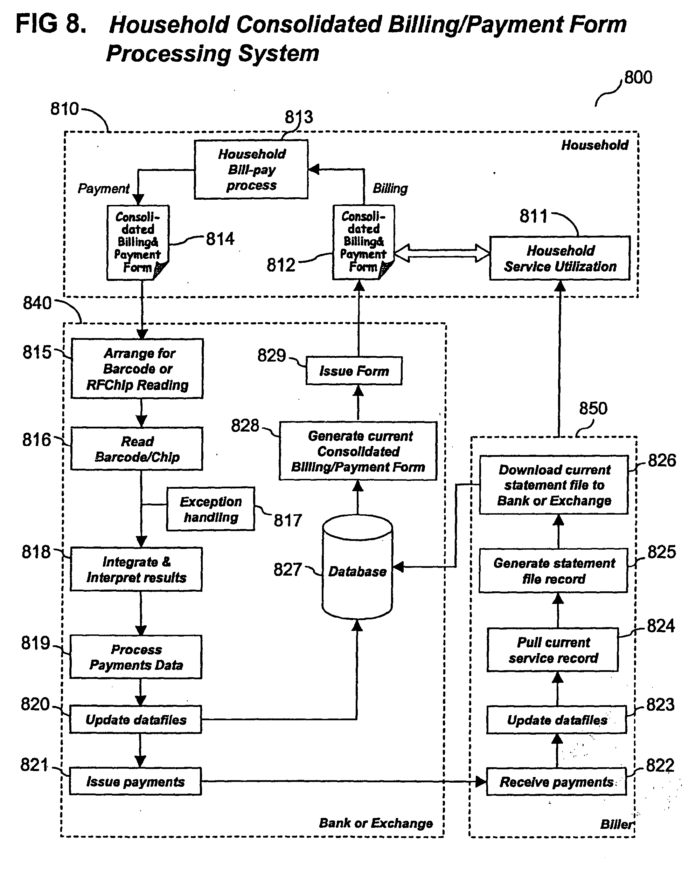

Referring now to figure 8, a block diagram of the hybrid electronic bill payment system 103 is seen for a previously enrolled purchaser. Purchasers 810 utilize services 811 provided by billers 850, and receive a corresponding consolidated billing/payment form statement 812 reflecting their use of and charge for a plurality of biller services. Purchasers 810 undertake their bill-paying process 813, using the consolidated form to simplify and speed this task. Purchasers 810 then return the consolidated payment form 814 with the purchaser's payment directions indicated. No checks are written, and the form itself is returned to the issuing financial institution or payment exchange 840.

When the payment form is received by the financial institution or exchange 840, the payment form is physically arranged 815 so that electronic identifiers such as barcodes can be read by special devices for that purpose such as a barcode reader 816. In this process, exception items will be identified and pulled for special handling 817, including handwriting interpretation, mutilated forms, missing information, etc. Results from both exception and fully automated processing are integrated and interpreted 818 to form usable input to the payment processing step 819. Data files 827 are then updated 820 to reflect payments and other instructions. Payments are issued 821 to billers 850 who receive them 822 and update their own files 823.

During the then-current payment cycle, purchaser records are pulled 824 and a current statement is generated 825, reflecting usage of the biller's service. The resulting statement file is then downloaded 826 to the financial institution's or exchange's database 827, and the data used across a plurality of billers to generate a current consolidated billing/payment form 828 for issuance to the purchaser by electronic or physical delivery means 829. A new form 812 reflecting new usage and cost information begins the next payment period.

It is understood that the preferred embodiment is only one illustrative version of the present invention, and that any number of variations and constructions toward the same ends could be envisioned using the methods and apparatus described; these are equally encompassed in this patent description.

## Claims

1. A system for providing for the electronic processing of purchaser payments comprising:
generating a consolidated billing and payment form containing billing information for accounts included in the underlying billing data and return payment instructions;
forwarding the consolidated billing and payment form to the purchaser;
after receiving the consolidated billing and payment form, the purchaser filling out the consolidated billing and payment form with instructions to confirm or modify the amount, timing, and sources of payment for each billed item, and
returning the consolidated billing and payment form to the issuing institution to electronically process the payment instructions.

2. The system for providing for the processing of purchaser payments of claim 1, further wherein the consolidated billing and payment form includes an electronic identifier.

3. The system for providing for the electronic processing of purchaser payments of claim 2, further wherein the electronic identifier is any one of a bar code, radio-frequency; or character recognition.

4. The system for providing for the electronic processing of purchaser payments of claim 1, further wherein the institution is a financial institution, a bank or a payment exchange.

5. The system for providing for the electronic processing of purchaser payments of claim 1, further wherein the purchasers are households, or businesses.

6. The system for providing for the electronic processing of purchaser payments of claim 1, further wherein the payment instructions are spot instructions or standing instructions.

7. The system for providing for the electronic processing of purchaser payments of claim 1, further wherein the payment instructions access multiple sources for payment.

8. The system for providing for the electronic processing of purchaser payments of claim 1, further wherein the payment instructions choose the frequency of payments.

9. The system for providing for the electronic processing of purchaser payments of claim 8, further wherein the frequency of payments are selected from the group consisting of weekly, bi-weekly, monthly, quarterly, and annually.

10. The system for providing for the electronic processing of purchaser payments of claim 1, further wherein the payment instructions modify timing of payments.

11. The system for providing for the electronic processing of purchaser payments of claim 1, further including determining from instructions the share of payment to be borne by each account.

12. The system for providing for the electronic processing of purchaser payments of claim 1, further wherein after receiving the consolidated billing and payment form, storing an image of the form at the institution.

13. The system for providing for the electronic processing of purchaser payments of claim 1, further wherein after receiving the consolidated billing and payment form, updating for the next payment cycle.

14. The system for providing for the electronic processing of purchaser payments of claim 1, further including posting billing information to an Internet-accessible website for reference by the purchaser.

15. The system for providing for the electronic processing of purchaser payments of claim 1, further including minimizing the effects of the resulting truncated payment window by selecting one or any combination of the group consisting of issuing the consolidated billing/payment form more than once during the payment period, to allow time for the purchaser to plan for the payments at risk, instituting level payments for all bills capable of being put on an average payments basis, modifying the due dates of bills under consolidation, issuing the consolidated billing/payment form at systematically different times during the payment period to enable different bills to experience the maximum payment windows over the course of a payment periods, issuing the consolidated billing/payment form during the payment period to maximize the payment period for all bills subject to their actual due dates, delaying the start of billing under consolidation, compensating billers for their foregone cost of funds arising from late payments imposed by use of the consolidated billing/payment form system, setting the issue date of the consolidated billing/payment form to the date that minimizes the amount likely to be paid out in compensation, setting the due dates of all billers to a given purchaser to the same narrow timing period, and aligning the due dates of a subset of all billed purchasers to the same narrow timing period.

16. An electronically processed consolidated billing and payment form, comprising:
an electronic identifier that identifies the form and specifically matches to a purchaser;
an electronic identifier that identifies billing items;
billing information for accounts included in the underlying billing data; and
return payment instructions, including the confirmation or modification of the amount, timing, and sources of payment for each billed item.

17. The consolidated billing and payment form of claim 16, further wherein the electronic identifier is a bar code, radio frequency or character recognition.

18. The consolidated billing and payment form of claim 16, further including spot payment instructions, standing payment instructions, multiple sources for payment or frequency of payments.

19. The consolidated billing and payment form of claim 16, further wherein an image of the consolidated billing and payment form is stored at the institution.

20. A system for providing for the electronic processing of purchaser payments comprising:
identifying a payment form and specifically matching the form to a purchaser by use of an electronic identifier;
identifying billing items by use of an electronic identifier;
linking the data on the form to the transaction processing data and fund sources needed to convert the instructions into actual payments
forwarding the payment form to the purchaser;
after receiving the payment form, the purchaser filling out the consolidated billing and payment form with instructions to confirm or modify the amount, timing, and sources of payment for each billed item, and
returning the payment form to electronically process the payment instructions.

21. The system for providing for the electronic processing of purchaser payments of claim 20, further wherein the payment form includes the electronic identifier.

22. The system for providing for the electronic processing of purchaser payments of claim 20, further wherein the electronic identifier is a bar code, radio frequency or character recognition.

23. The system for providing for the electronic processing of purchaser payments of claim 20, further wherein the system is operated by a financial institution or payment exchange.

24. The system for providing for the electronic processing of purchaser payments of claim 23, further wherein the financial institution is a bank.

25. The system for providing for the electronic processing of purchaser payments of claim 20, further wherein the purchasers are households or businesses.

26. The system for providing for the electronic processing of purchaser payments of claim 20, further wherein the payment instructions are spot instructions or standing instructions.

27. The system for providing for the electronic processing of purchaser payments of claim 20, further wherein the payment instructions access multiple sources for payment.

28. The system for providing for the electronic processing of purchaser payments of claim 20, further wherein the payment instructions choose the frequency of payments.

29. The system for providing for the electronic processing of purchaser payments of claim 28, further wherein the frequency of payments are selected from the group consisting of weekly, bi-weekly, monthly, quarterly, and annually.

30. The system for providing for the electronic processing of purchaser payments of claim 20, further wherein the payment instructions modify timing of payments.

31. The system for providing for the electronic processing of purchaser payments of claim 20, further including determining from instructions the share of payment to be borne by each account.

32. The system for providing for the electronic processing of purchaser payments of claim 20, further wherein after receiving the payment form, storing an image of the form.

33. The system for providing for the electronic processing of purchaser payments of claim 20, further wherein after receiving the payment form, updating for the next payment cycle.

34. The system for providing for the electronic processing of purchaser payments of claim 20, further including posting billing information to an Internet-accessible website for reference by the purchaser.

35. The system for providing for the electronic processing of purchaser payments of claim 20, further including determining the share of payment to be borne by each account.

36. The system for providing for the electronic processing of purchaser payments of claim 20, further including minimizing the effects of the resulting truncated payment window by selecting one or any combination of the group consisting of issuing the payment form more than once during the payment period, thus allowing time for the purchaser to plan for the payments at risk, instituting level payments for all bills capable of being put on an average payments basis, modifying the due dates of bills under consolidation, issuing the payment form at systematically different times during payment period to enable different bills to experience the maximum payment windows over the course of a period of the payment periods, issuing the payment form during the payment period to maximize when the payment period for all bills, subject to their actual due dates, delaying the start of billing under consolidation, compensating billers for their foregone cost of funds arising from late payments imposed by use of the payment form system, setting the issue date of the payment form to the date that minimizes the amount likely to be paid out in compensation, setting the due dates of all billers to a given purchaser to the same narrow timing period, and aligning the due dates of a subset of all billed purchasers to the same narrow timing period.

37. A system for providing for the electronic processing of purchaser payments comprising:
determining a list of qualified participants:
configuring a set of application connectors to electronically connect to represented billers;
generating a current version of a payment form;
issuing the payment form to the purchaser;
after receiving the payment form, the purchaser processing and returning the payment form to the issuing institution for execution of payment instructions.

38. The system for providing for the electronic processing of purchaser payments of claim 37, further wherein step of determining a list of qualified participants includes extracting checking account data and compiling a list of recurrent purchaser payments.

39. The system for providing for the electronic processing of purchaser payments of claim 37, further wherein step of determining a list of qualified participants includes enrolling purchasers selected from the group consisting of participating financial institutions, billers, and both.

40. The system for providing for the electronic processing of purchaser payments of claim 37, further including determining from instructions the share of payment to be borne by each account.

41. The system for providing for the electronic processing of purchaser payments of claim 37, further wherein after receiving the payment form, storing an image of the form.

42. The system for providing for the electronic processing of purchaser payments of claim 37, further wherein after receiving the electronic consolidated billing and payment form, updating for the next payment cycle.

43. The system for providing for the electronic processing of purchaser payments of claim 37, further including posting billing information to an Internet-accessible website for reference by the purchaser.

44. The system for providing for the electronic processing of purchaser payments of claim 37, further including determining the share of payment to be borne by each account.

45. The system for providing for the electronic processing of purchaser payments of claim 37, further including minimizing the effects of the resulting truncated payment window by selecting one or any combination of the group consisting of issuing the payment form more than once during the payment period, thus allowing time for the purchaser to plan for the payments at risk, instituting level payments for all bills capable of being put on an average payments basis, modifying the due dates of bills under consolidation, issuing the payment form at systematically different times during the payment period to enable different bills to experience the maximum payment windows over the course of a period of the payment periods, issuing the payment form during the payment period to maximize when the payment period for all bills, subject to their actual due dates, delaying the start of billing under consolidation, compensating billers for their foregone cost of funds arising from late payments imposed by use of the payment form system, setting the issue date of the payment form to the date that minimizes the amount likely to be paid out in compensation, setting the due dates of all billers to a given purchaser to the same narrow timing period, and aligning the due dates of a subset of all billed purchasers to the same narrow timing period.

46. A system for providing for the electronic processing of purchaser payments comprising:
generating a consolidated billing and payment form containing billing information for accounts included in the underlying billing data and return payment instructions; and
minimizing the effects of the resulting truncated payment window by selecting one or any combination of the group consisting of issuing the consolidated billing and payment form more than once during the payment period, thus allowing time for the purchaser to plan for the payments at risk, instituting level payments for all bills capable of being put on an average payments basis, modifying the due dates of bills under consolidation, issuing the consolidated billing and payment form at systematically different times during the payment period to enable different bills to experience the maximum payment windows over the course of a period of the payment periods, issuing from the consolidated billing and payment form during the payment period to maximize when the payment period for all bills, subject to their actual due dates, delaying the start of billing under consolidation, compensating billers for their foregone cost of funds arising from late payments imposed by use of the consolidated billing and payment form system, setting the issue date of the consolidated billing and payment form to the date that minimizes the amount likely to be paid out in compensation, setting the due dates of all billers to a given purchaser to the same narrow timing period, and aligning the due dates of a subset of all billed purchasers to the same narrow timing period.

47. The system for providing for the electronic processing of purchaser payments of claim 46, further including forwarding the consolidated billing and payment form to the purchaser.

48. The system for providing for the electronic processing of purchaser payments of claim 47, further including after receiving the consolidated billing and payment form, the purchaser filling out the electronic consolidated billing and payment form with instructions to confirm or modify the amount, timing, and sources of payment for each billed item.

49. The system for providing for the electronic processing of purchaser payments of claim 48, further including returning the consolidated billing and payment form to the issuing institution to electronically process the payment instructions.

50. The system for providing for the electronic processing of purchaser payments of claim 49, further wherein after receiving the consolidated billing , and payment form, storing an image of the form at the institution.

51. The system for providing for the electronic processing of purchaser payments of claim 49, further wherein after receiving the consolidated billing and payment form, updating for the next payment cycle.

52. The system for providing for the electronic processing of purchaser payments of claim 46, further wherein the consolidated billing and payment form includes an electronic identifier.

53. The system for providing for the electronic processing of purchaser payments of claim 52, further wherein the electronic identifier is a bar code, radio frequency or character recognition.

54. The system for providing for the electronic processing of purchaser payments of claim 46, further wherein the system is operated by a financial institution.

55. The system for providing for the electronic processing of purchaser payments of claim 54, further wherein the financial institution is a bank or payment exchange.

56. The system for providing for the electronic processing of purchaser payments of claim 46, further wherein the purchasers are households or businesses.

57. The system for providing for the electronic processing of purchaser payments of claim 46, further wherein the payment instructions are spot instructions or standing instructions.

58. The system for providing for the electronic processing of purchaser payments of claim 46, further wherein the payment instructions access multiple sources for payment.

59. The system for providing for the electronic processing of purchaser payments of claim 46, further wherein the payment instructions choose the frequency of payments.

60. The system for providing for the electronic processing or purchaser payments of claim 47, further wherein the frequency of payments are selected from the group consisting of weekly, bi-weekly, monthly, quarterly and annually.

61. The system for providing for the electronic processing of purchaser payments of claim 46, further wherein the payment instructions modify timing of payments.

62. Apparatus for implementing electronic processing of purchaser payments, comprising:
means for generating as printed output a consolidated billing and payment form containing billing information for multiple accounts with different issuing institutions;
means for receiving as input instructions from the consolidated billing and payment form as modified by a user to bear indications to confirm or modify an amount, timing and source of payment in respect of each account of said multiple accounts;
means for automatically processing said input instructions and initiating electronic processing of each one of said payment instructions with the respective issuing institution.
